# EUROPEAN PATENT SPECIFICATION

(11) **EP 2 391 178 B1**
(45) Date of publication and mention of the grant of the patent: **18.03.2015**
(21) Application number: 09839541.1
(22) Date of filing: 19.11.2009
(51) Int. Cl.: H04W 84/12, G06F 3/00, G06F 15/16, G06F 1/32

(54) **WIRELESS MODEM DEVICE, SYSTEM, SLEEP/WAKE-UP METHOD AND TERMINAL**
DRAHTLOSES MODEMGERÄT, SYSTEM, SCHLAF-AUFWECKVERFAHREN UND ENDGERÄT
DISPOSITIF MODEM SANS FIL, SYSTÈME, PROCÉDÉ DE VEILLE/RÉVEIL ET TERMINAL

(30) Priority: 04.02.2009 CN 200910006519
(43) Date of publication of application: 30.11.2011
(73) Proprietor: Huawei Device Co., Ltd., Shenzhen, Guangdong 518129 (CN)
(72) Inventor: WANG, Yonghong, Longgang District Shenzhen 518129 (CN); LI, Zongyan, Longgang District Shenzhen 518129 (CN); ZHOU, Weimin, Longgang District Shenzhen 518129 (CN); ZHANG, Ming, Longgang District Shenzhen 518129 (CN); GUAN, Hongchao, Longgang District Shenzhen 518129 (CN)
(74) Representative: Kreuz, Georg Maria
(86) International application number: PCT/CN2009/075036
(87) International publication number: WO 2010/088824

(56) References cited:
- EP-A2- 1 630 644
- CN-A- 1 758 802
- CN-A- 1 913 377
- CN-A- 101 208 680
- CN-A- 101 498 964
- US-A1- 2004 015 732
- US-A1- 2007 005 824
- US-A1- 2007 037 547
- US-A1- 2007 140 199
- US-B1- 6 467 042

## Description

### FIELD OF THE INVENTION

The present invention relates to the field of communication technologies, and in particular, to a wireless modem device, a wireless modem system, a wireless modem device sleep/wake-up method, and a terminal.

### BACKGROUD OF THE INVENTION

A Wireless Wide Area Network (Wireless Wide Area Network, WWAN) MOdulator and DEModulator (MOdulator and DEModulator, MODEM) device of a Universal Serial Bus (Universal Serial Bus, USB) port is powered by a USB port of a Personal Computer (Personal Computer, PC). When the PC enters a Standby or Sleep state, some USB ports of the PC stay powered. However, the prior art has at least the following disadvantages: 1) The wireless MODEM of the USB port cannot be turned off, which still consumes power when the PC is in a Standby or Sleep state; 2) after the USB WWAN Modem is turned off, if the PC resumes from the Sleep state, the USB WWAN Modem cannot be started automatically and can only be started through unplugging and plugging.

In one situation, when the PC enters the Standby or Sleep state and the USB port of the PC still stays powered, the wireless MODEM communicating through the USB cannot be turned off. In this case, the PC cannot really enter the Standby or Sleep state, and the wireless modem still consumes the electrical energy of the PC. Therefore, the Standby or Sleep function of the PC is affected, and the use life of the PC is reduced.

In another situation, when the PC enters the Standby or Sleep state and the USB port of the PC still stays powered, the wireless modem communicating through the USB is turned off. At this time, when the PC resumes from the Standby or Sleep state, since the USB port that stays powered does not go through a process of being powered off and then powered on, the wireless MODEM communicating through the USB cannot obtain a startup signal of the PC, so the wireless MODEM cannot be turned on again. A user has to unplug the wireless MODEM connected to the PC first and then plug the wireless modem again to turn on the wireless MODEM. Especially, for the wireless MODEM communicating through the USB of a built-in Peripheral Component Interconnect Express (PCI-e) mini card interface, the user cannot unplug and plug the wireless modem again, so the PC has to be restarted.

A method for lowering power consumption of a Universal Serial Bus (USB) device is disclosed by David G. Wright etc., in US 6,467,042. The method includes the steps of (A) detecting a frame comprising one or more indicators from an input data stream and (B) waking the USB device or continually operating in a suspend/sleep mode, in response to the one or more indicators.

### SUMMARY OF THE INVENTION

The present invention is directed to a wireless modem device according to claim 1, a wireless modem system according to claim 6, a wireless modem device sleep/wake-up method according to claims 7 and 8, and a terminal according to claim 4, so the wireless modem device has sleep and self-starting functions, thereby increasing the operability of the wireless modem device.

In one aspect, the present invention provides a wireless modem device, where the wireless modem device includes:
a USB port, connected to a terminal through a serial bus to obtain an action signal from the terminal; and
a sleep/wake-up circuit unit, connected to the USB port and configured to send a notification signal to a central processing unit (CPU) of the wireless modem device according to the received action signal to enable the wireless modem device to sleep or wake up.

In another aspect, the present invention provides a terminal, where the terminal includes:
a USB port, connected to a wireless modem device through a serial bus to provide an action signal to the wireless modem device; and
a modem drive unit, connected to the USB port and an operating system of the terminal, and configured to receive a sleep signal, a standby signal or a resume signal of the terminal sent by the operating system and convert the received signal into an action signal for driving the wireless modem device to output the action signal to the wireless modem device through the USB port, where the action signal is a standby/sleep signal or a wake-up signal of the terminal or a suspend signal or a resume signal of a USB.

In another aspect, the present invention provides a wireless modem system, where the wireless modem system includes a terminal and a wireless modem device, where
the terminal is configured to convert a sleep signal, a standby signal or a resume signal of the terminal into an action signal for driving the wireless modem device and send the action signal to the wireless modem device; and
the wireless modem device is configured to enable the wireless modem device to sleep or wake up according to the received action signal,
where the action signal is a standby/sleep signal or a wake-up signal of the terminal or a suspend signal or a resume signal of a USB.

In another aspect, the present invention provides a wireless modem device sleep/wake-up method, where the wireless modem device sleep/wake-up method includes:
receiving an action signal obtained from a terminal through a serial bus; and
sending a notification signal to a central processing unit (CPU) of a wireless modem device according to the received action signal to enable the wireless modem device to sleep or wake up.

In another aspect, the present invention provides a wireless modem device sleep/wake-up method, where the wireless modem device sleep/wake-up method includes:
converting a sleep signal, a standby signal or a resume signal into an action signal for driving a wireless modem device; and
outputting the action signal to the wireless modem device through a serial bus to enable the wireless modem device to sleep or wake up.

It can be known from the preceding technical solutions that, through the wireless modem device, the wireless modem system, the wireless modem device sleep/wake-up method, and the terminal of the present invention, the action signal generated by the terminal is sent through the USB port, and after the action signal is received by the USB port of the wireless modem device, the action signal controls the CPU in the wireless modem device to either sleep or wake up, so that the power consumption of the wireless modem device is decreased when the wireless modem device does not need to be used, and the wireless modem device is capable of self-starting when the terminal resumes the use of the wireless modem device, thereby increasing the usability of the wireless modem device.

### BRIEF DESCRIPTION OF THE DRAWINGS

FIG. 1 is a schematic structural view of a wireless modem device according to a first embodiment of the present invention;
FIG. 2 is a schematic structural view of a wireless modem device according to a second embodiment of the present invention;
FIG. 3 is a schematic structural view of a terminal according to a first embodiment of the present invention;
FIG. 4 is a schematic structural view of a terminal according to a second embodiment of the present invention;
FIG. 5 is a schematic structural view of a wireless modem system according to an embodiment of the present invention;
FIG. 6 is a schematic flow chart of a wireless modem device sleep/wake-up method according to a first embodiment of the present invention;
FIG. 7 is a schematic flow chart of a wireless modem device sleep/wake-up method according to a second embodiment of the present invention;
FIG. 8 is a schematic flow chart of a wireless modem device sleep/wake-up method according to a third embodiment of the present invention;
FIG. 9 is a schematic flow chart of a wireless modem device sleep/wake-up method according to a fourth embodiment of the present invention;
FIG. 10 is a schematic flow chart of a wireless modem device sleep/wake-up method according to a fifth embodiment of the present invention; and
FIG. 11 is a schematic flow chart of a wireless modem device sleep/wake-up method according to a sixth embodiment of the present invention.

### DETAILED DESCRIPTION OF THE EMBODIMENTS

The technical solutions of the embodiments of the present invention are described in the following clearly with reference to the accompanying drawings. Apparently, the embodiments in the following descriptions are merely a part rather than all of the embodiments of the present invention.

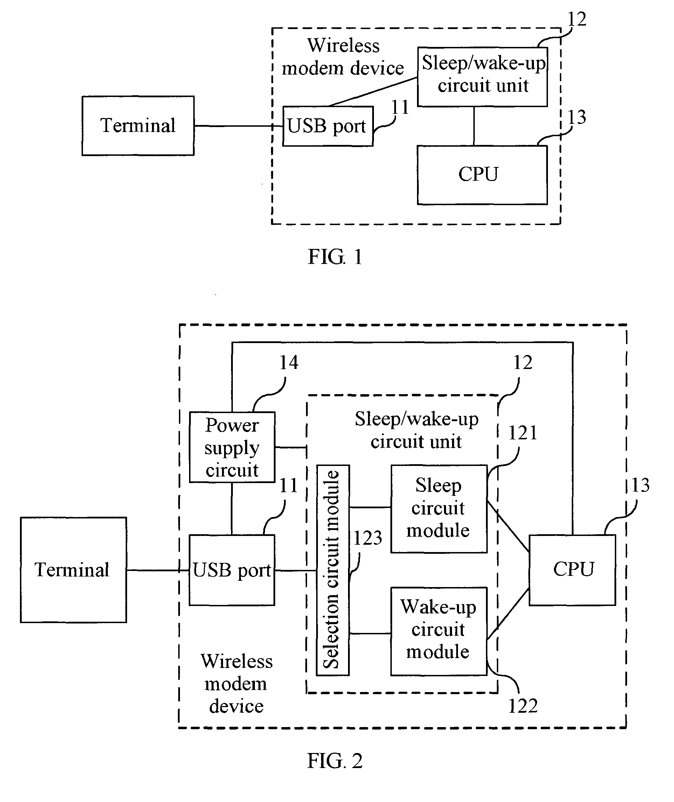

FIG. 1 is a schematic structural view of a wireless modem device according to a first embodiment of the present invention. As shown in FIG. 1, the wireless modem device includes a Universal Serial Bus (USB) port 11 and a sleep/wake-up circuit unit 12. The USB port 11 is configured to connect to a terminal through a serial bus to obtain an action signal from the terminal. The sleep/wake-up circuit unit 12 is connected to the USB port 11 and configured to send a notification signal to a Central Processing Unit (CPU) 13 of the wireless modem device according to the received action signal to enable the wireless modem device to sleep or wake up.

The action signal may be a standby/sleep signal or a wake-up signal of the terminal or a suspend signal or a resume signal of a USB, where the suspend signal and the resume signal are respectively obtained by converting the standby/sleep signal or the wake-up signal. That is to say, the action signal received by the USB port 11 of the wireless modem device may be the standby/sleep signal or the wake-up signal of the terminal directly sent by the terminal, the suspend signal of the USB suitable for the USB port 11 converted from the standby/sleep signal in the terminal, or the resume signal of the USB suitable for the USB port 11 converted from the wake-up signal. The action signal may be any format that can be recognized by the wireless modem device.

The wireless modem device according the embodiment of the present invention may also include some basic function modules for implementing a modem so that the terminal may access the internet, where data signals received by the USB port 11 are not limited to the action signal. Only addition and improvement of circuit modules corresponding to newly added or changed functions in the wireless modem device are described herein. The terminal mentioned in the embodiment of the present invention may be peripheral equipment similar to a computer and capable of wireless network connection by adopting the wireless modem device. In the following embodiments of the present invention, the peripheral equipment is represented by the terminal.

Through the wireless modem device provided in this embodiment, the action signal is received through the USB port, the sleep/wake-up circuit unit controls the CPU in the wireless modem device to sleep or wake up, so that the power consumption of the wireless modem device is decreased when the wireless modem device does not need to be used, and the wireless modem device is capable of self-starting when the use of the wireless modem device is resumed, thereby increasing the usability of the wireless modem device.

FIG. 2 is a schematic structural view of a wireless modem device according to a second embodiment of the present invention. As shown in FIG. 2, the wireless modem device includes a USB port 11 and a sleep/wake-up circuit unit 12 as described in the foregoing embodiment, where the sleep/wake-up circuit unit 12 may include a sleep circuit module 121, a wake-up circuit module 122, and a selection circuit module 123. The selection circuit module 123 is connected to the USB port 11 and configured to recognize a standby/sleep signal or a suspend signal or a wake-up signal or a resume signal input from the USB port 11 to select the corresponding sleep circuit module 121 or wake-up circuit module 122. The sleep circuit module 121 is selected to be triggered when the selection circuit module 123 recognizes a received signal as the standby/sleep signal or the suspend signal. The sleep circuit module 121 is configured to send a first notification signal to a CPU 13, so that the wireless modem device enters a sleep state or a suspend state. The wake-up circuit module 122 is selected to be triggered when the selection circuit module 123 recognizes a received signal as the wake-up signal or the resume signal. The wake-up circuit module 122 is configured to send a second notification signal to the CPU 13 to wake up or resume the wireless modem device.

The wireless modem device may also include a power supply circuit 14, which is connected to the USB port 11 and configured to output a power supply signal to supply power to the sleep/wake-up circuit unit 12 and the CPU 13.

Through the wireless modem device provided in this embodiment, the sleep signal or the suspend signal or the wake-up signal or the resume signal is received through the USB port, the sleep circuit module processes the sleep signal or the suspend signal to control the CPU in the wireless modem device to sleep or suspend, and the wake-up circuit module processes the wake-up signal or the resume signal to control the CPU in the wireless modem device to wake up or resume, so that the power consumption of the wireless modem device is decreased when the wireless modem device does not need to be used, and the wireless modem device is capable of self-starting when the use of the wireless modem device is resumed, thereby increasing the usability of the wireless modem device.

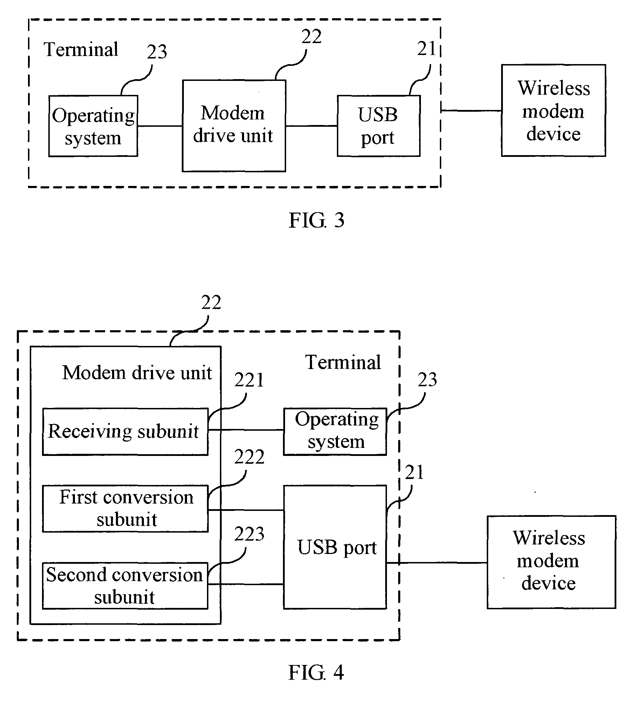

FIG. 3 is a schematic structural view of a terminal according to a first embodiment of the present invention. As shown in FIG. 3, the terminal includes a USB port 21 and a modem drive unit 22. The USB port 21 is connected to a wireless modem device through a serial bus to provide an action signal to the wireless modem device. The modem drive unit 22 is connected to the USB port 21 and an operating system 23 of the terminal, and configured to receive a sleep signal, a standby signal or a resume signal of the terminal sent by the operating system 23 and convert the signal into the action signal for driving the wireless modem device, where the action signal is output to the wireless modem device through the USB port 21, and may be a standby/sleep signal or wake-up signal of the terminal or a suspend signal or a resume signal of a USB.

This embodiment only describes that the terminal is connected to the wireless modem device according to the embodiment of the present invention through a serial bus and controls relevant function modules of the wireless modem device. By adding one modem drive unit in the terminal, it can be implemented that when the terminal is in a sleep state or a standby state, the wireless modem device connected to the terminal also enters the sleep or suspend state, and when the terminal resumes work, the wireless modem device connected to the terminal also resumes from the sleep or suspend state to be started, so that the power consumption of the wireless modem device is decreased when the wireless modem device does not need to be used, and the wireless modem device is capable of self-starting when the use of the wireless modem device is resumed, thereby increasing the usability of the wireless modem device.

FIG. 4 is a schematic structural view of a terminal according to a second embodiment of the present invention. As shown in FIG. 4, the terminal in this embodiment includes a USB port 21 and a modem drive unit 22 as described in the foregoing embodiment, where the modem drive unit 22 may also specifically include a receiving subunit 221, a first conversion subunit 222, and a second conversion subunit 223. The receiving subunit 221 is configured to receive a sleep signal, a standby signal or a resume signal of the terminal sent by an operating system 23. The first conversion subunit 222 is configured to convert the sleep signal and the standby signal of the terminal into a standby/sleep signal of the terminal or convert the resume signal of the terminal into a wake-up signal of the terminal. The second conversion subunit 223 is configured to convert the standby/sleep signal of the terminal into a suspend signal of a USB or convert the wake-up signal of the terminal into a resume signal of the USB.

If the USB port of the wireless modem device (that is, the USB port 11 as shown in FIG. 2) may receive the standby/sleep signal or the wake-up signal of the terminal directly sent by the terminal, the standby/sleep signal of the terminal or the wake-up signal of the terminal converted by the first conversion subunit 222 is sent to the USB port 11 of the wireless modem device. If the USB port 11 of the wireless modem device is not adaptable to the standby/sleep signal or the wake-up signal of the terminal directly sent by the terminal, the second conversion subunit 223 in the terminal may also convert the standby/sleep signal of the terminal into the suspend signal of the USB suitable for the USB port 11, or convert the wake-up signal of the terminal into the resume signal of the USB suitable for the USB port 11, and then the converted signal is sent to the USB port 11 of the wireless modem device.

It can be known from the detailed description of the modem drive unit in the terminal according to this terminal that, the terminal may send an action signal of standby, sleep, or resume to the wireless modem device, so that when the terminal is in a sleep state or a standby state, the wireless modem device connected to the terminal also enters the sleep or suspend state, and when the terminal resumes work, the wireless modem device connected to the terminal also resumes from the sleep or suspend state to be started, thereby increasing the usability of the wireless modem device.

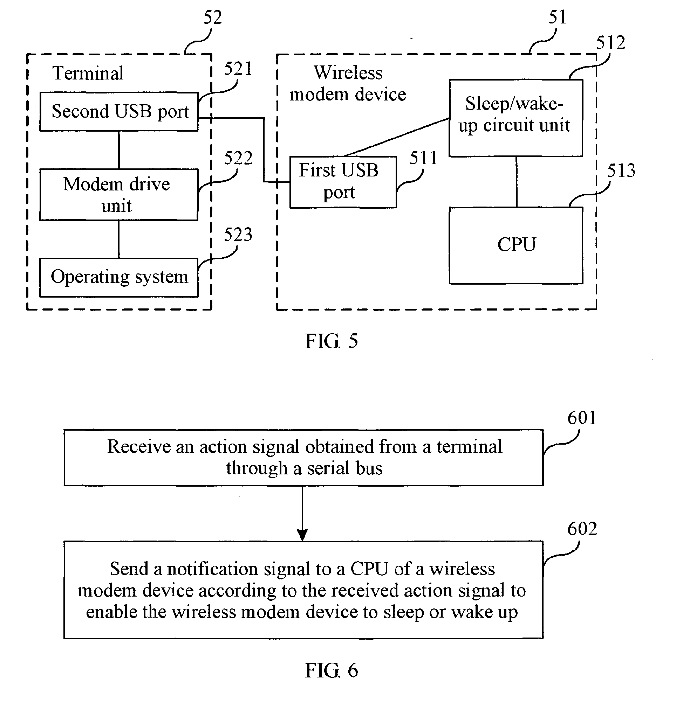

FIG. 5 is a schematic structural view of a wireless modem system according to an embodiment of the present invention. As shown in FIG. 5, the system includes a wireless modem device 51 and a terminal 52. The wireless modem device 51 is configured to enable the wireless modem device 51 to sleep or wake up according to a received action signal. The terminal 52 is configured to convert a sleep signal, a standby signal or a resume signal of the terminal 52 into the action signal for driving the wireless modem device 51 and send the action signal to the wireless modem device 51, where the action signal is a standby/sleep signal or a wake-up signal of the terminal 52, or a suspend signal or a resume signal of a USB adaptable to a USB port.

The wireless modem device 51 may include: a first USB port 511, connected to a second USB port 521 in the terminal 52 through a serial bus to obtain a power supply signal and the action signal from the terminal 52; and a sleep/wake-up circuit unit 512, connected to the first USB port 511 and configured to receive the action signal and send a notification signal to a CPU 513 of the wireless modem device 51 to enable the wireless modem device 51 to sleep or wake up.

The terminal 52 may include: the second USB port 521, connected to the first USB port 511 in the wireless modem device 51 through the serial bus to provide the power supply signal and the action signal; and a modem drive unit 522, connected to the second USB port 521 and an operating system 523 of the terminal 52 and configured to receive the sleep signal, the standby signal or the resume signal of the terminal 52 sent by the operating system 523 of the terminal 52 and convert the signal into the action signal for driving the wireless modem device 51.

The detailed compositions and functions of modules of the wireless modem device and the terminal in the wireless modem system provided in this embodiment are as described in the foregoing embodiment. Through this embodiment, the second USB port of the terminal sends the standby/sleep signal or the wake-up signal or the suspend signal or the resume signal generated by the terminal, and after the signal is received by the first USB port of the wireless modem device, the sleep/wake-up circuit unit controls the CPU in the wireless modem device to sleep or wake up, so that the power consumption of the wireless modem device is decreased when the wireless modem device does not need to be used, and the wireless modem device is capable of self-starting when the use of the wireless modem device is resumed, thereby increasing the usability of the wireless modem device.

FIG. 6 is a schematic flow chart of a wireless modem device sleep/wake-up method according to a first embodiment of the present invention. As shown in FIG. 6, the method includes the following steps.

In step 601, an action signal obtained from a terminal is received through a serial bus.

In step 602, a notification signal is sent to a CPU of a wireless modem device according to the received action signal to enable the wireless modem device to sleep or wake up.

The action signal may be a standby/sleep signal or a wake-up signal of the terminal or a suspend signal or a resume signal of a USB, where the suspend signal and the resume signal are respectively obtained by converting the standby/sleep signal and the wake-up signal. That is to say, the action signal received by a USB port of the wireless modem device may be the standby/sleep signal or the wake-up signal of the terminal directly sent by the terminal, the suspend signal of the USB suitable for the USB port converted from the standby/sleep signal in the terminal, or the resume signal of the USB suitable for the USB port converted from the wake-up signal. The action signal may be any format that can be recognized by the wireless modem device.

Through the wireless modem device sleep/wake-up method provided in this embodiment, it can be implemented that, when the wireless modem device does not need to be used, the wireless modem device is enabled to sleep to decrease the power consumption of the wireless modem device, and when the wireless modem device needs to be used again, the wireless modem device is enabled to wake up from a sleep state to implement self-starting of the wireless modem device, thereby increasing the usability of the wireless modem device.

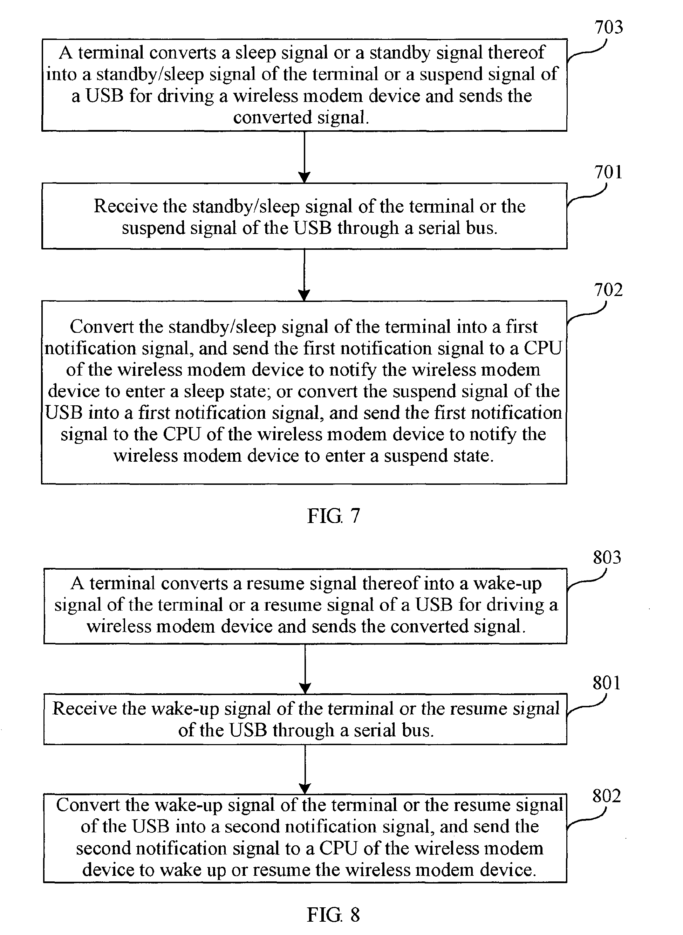

FIG. 7 is a schematic flow chart of a wireless modem device sleep/wake-up method according to a second embodiment of the present invention. As shown in FIG. 7, the method includes the following steps.

In step 701, a standby/sleep signal of a terminal or a suspend signal of a USB is received through a serial bus.

In step 702, the standby/sleep signal of the terminal is converted into a first notification signal, and the first notification signal is sent to a CPU of a wireless modem device to instruct the wireless modem device to enter a sleep state; or the suspend signal of the USB is converted into a first notification signal, and the first notification signal is sent to the CPU of the wireless modem device to instruct the wireless modem device to enter a suspend state.

Step 703 may also be included before step 701. In step 703, the terminal converts a sleep signal or a standby signal into the standby/sleep signal of the terminal or the suspend signal of the USB for driving the wireless modem device and sends the converted signal.

The specific work process of this embodiment is described with reference to the schematic structural view of the wireless modem device in FIG. 2 and the schematic structural view of the terminal in FIG. 4. When the terminal intends to enter the sleep state or a standby state, an operating system 23 inside the terminal sends a sleep signal or a standby signal to a modem drive unit 22. A first conversion subunit 222 in the modem drive unit 22 converts the sleep signal or the standby signal into the standby/sleep signal of the terminal for driving the wireless modem device, and the standby/sleep signal of the terminal is sent to a USB port 11 of the wireless modem device through a USB port 21 of the terminal. Alternatively, a second conversion subunit 223 in the modem drive unit 22 further converts the standby/sleep signal of the terminal into the suspend signal of the USB, and the suspend signal of the USB is sent to the USB port 11 of the wireless modem device through the USB port 21 of the terminal. The USB port 11 sends the sleep signal to a selection circuit module 123 of the wireless modem device. The selection circuit module 123 recognizes the received signal as the standby/sleep signal of the terminal or the suspend signal of the USB, and then sends the standby/sleep signal of the terminal or the suspend signal to a sleep circuit module 121. The sleep circuit module 121 sends a first notification signal to a CPU 13 of the wireless modem device according to the standby/sleep signal of the terminal or the suspend signal of the USB, so that the CPU 13 enters the sleep state or the suspend state, that is, the wireless modem device enters the sleep state or the suspend state.

Through the wireless modem device sleep/wake-up method provided in this embodiment, it can be implemented that, when the wireless modem device does not need to be used, the wireless modem device is enabled to sleep to decrease the power consumption of the wireless modem device, thereby increasing the usability of the wireless modem device.

FIG. 8 is a schematic flow chart of a wireless modem device sleep/wake-up method according to a third embodiment of the present invention. As shown in FIG. 8, the method includes the following steps.

In step 801, a wake-up signal of a terminal or a resume signal of a USB is received through a serial bus.

In step 802, the wake-up signal of the terminal or the resume signal of the USB is converted into a second notification signal, and the second notification signal is sent to a CPU of a wireless modem device to wake up or resume the wireless modem device.

Step 803 may also be included before step 801. In step 803, the terminal converts a resume signal into the wake-up signal of the terminal or the resume signal of the USB for driving the wireless modem device and sends the converted signal.

The specific work process of this embodiment is described with reference to the schematic structural view of the wireless modem device in FIG. 2 and the schematic structural view of the terminal in FIG. 4. When the terminal intends to resume a work state from a sleep state or a standby state, an operating system 23 inside the terminal sends a resume signal of the terminal to a modem drive unit 22. A first conversion subunit 222 in the modem drive unit 22 converts the resume signal into the wake-up signal of the terminal or the resume signal of the USB for driving the wireless modem device, and the wake-up signal of the terminal or the resume signal of the USB is sent to a USB port 11 of the wireless modem device through a USB port 21 of the terminal. Alternatively, a second conversion subunit 223 in the modem drive unit 22 further converts the wake-up signal of the terminal into the resume signal of the USB for driving the wireless modem device, and the resume signal of the USB is sent to the USB port 11 of the wireless modem device through the USB port 21 of the terminal. The USB port 11 sends the wake-up signal to a selection circuit module 123 of the wireless modem device. The selection circuit module 123 recognizes the received signal as the wake-up signal of the terminal or the resume signal of the USB, and then sends the wake-up signal of the terminal or the resume signal of the USB to a wake-up circuit module 122. The wake-up circuit module 122 sends a second notification signal to a CPU 13 of the wireless modem device according to the wake-up signal of the terminal or the resume signal of the USB, so that the CPU 13 wakes up or resumes from the sleep state or the suspend state, that is, the wireless modem device resumes the work state.

Through the wireless modem device sleep/wake-up method provided in this embodiment, it can be implemented that, when the wireless modem device needs to be used again, the wireless modem device is enabled to wake up from the sleep state to implement self-starting of the wireless modem device, thereby increasing the usability of the wireless modem device.

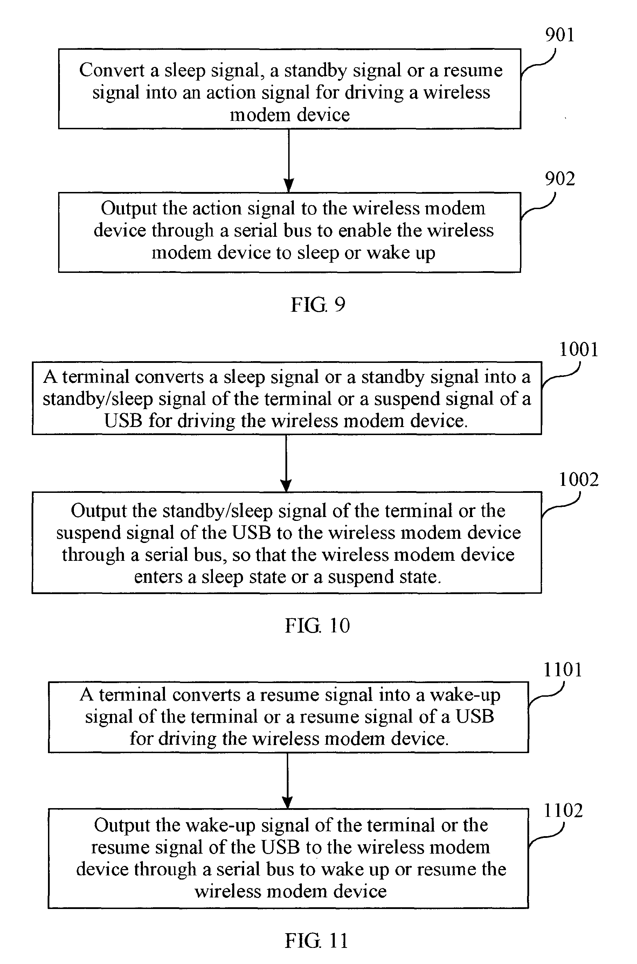

FIG. 9 is a schematic flow chart of a wireless modem device sleep/wake-up method according to a fourth embodiment of the present invention. As shown in FIG. 9, the method includes the following steps.

In step 901, a sleep signal, a standby signal or a resume signal is converted into an action signal for driving a wireless modem device.

In step 902, the action signal is output to the wireless modem device through a serial bus to enable the wireless modem device to sleep or wake up.

The terminal converts the sleep signal, standby signal or resume signal of the terminal itself into the action signal for driving the wireless modem device. The action signal may be a standby/sleep signal or a wake-up signal of the terminal or a suspend signal or a resume signal of a USB, where the suspend signal and the resume signal are respectively obtained by converting the standby/sleep signal and the wake-up signal. The terminal outputs the action signal to the wireless modem device, and the wireless modem device converts the action signal into a notification signal to enable the wireless modem device to sleep or wake up through a CPU of the wireless modem device.

Through the wireless modem device sleep/wake-up method provided in this embodiment, it can be implemented that when the wireless modem device does not need to be used, the wireless modem device is enabled to sleep to decrease the power consumption of the wireless modem device, and when the wireless modem device needs to be used again, the wireless modem device is enabled to wake up from a sleep state to implement self-starting of the wireless modem device, thereby increasing the usability of the wireless modem device.

FIG. 10 is a schematic flow chart of a wireless modem device sleep/wake-up method according to a fifth embodiment of the present invention. As shown in FIG. 10, the method includes the following steps.

In step 1001, a terminal converts a sleep signal or a standby signal into a standby/sleep signal of the terminal or a suspend signal of a USB for driving the wireless modem device.

In step 1002, the standby/sleep signal of the terminal or the suspend signal of the USB is output to the wireless modem device through a serial bus, so that the wireless modem device enters a sleep state or a suspend state.

For detailed description of the wireless modem device sleep/wake-up method in combination with the structure of the wireless modem device and the terminal, reference may be made to the foregoing embodiment, and the details will be not described herein again. Through the wireless modem device sleep/wake-up method provided in this embodiment, it can be implemented that when the wireless modem device does not need to be used, the wireless modem device is enabled to sleep to decrease the power consumption of the wireless modem device, thereby increasing the usability of the wireless modem device.

FIG. 11 is a schematic flow chart of a wireless modem device sleep/wake-up method according to a sixth embodiment of the present invention. As shown in FIG. 11, the method includes the following steps.

In step 1101, a terminal converts a resume signal into a wake-up signal of the terminal or a resume signal of a USB for driving the wireless modem device.

In step 1102, the wake-up signal of the terminal or the resume signal of the USB is output to the wireless modem device through a serial bus to wake up or resume the wireless modem device.

For detailed description of the wireless modem device sleep/wake-up method in combination with the structure of the wireless modem device and the terminal, reference may be made to the foregoing embodiment, and the details will be not described herein again. Through the wireless modem device sleep/wake-up method provided in this embodiment, it can be implemented that, when the wireless modem device needs to be used again, the wireless modem device is enabled to wake up from the sleep state to implement self-starting of the wireless modem device, thereby increasing the usability of the wireless modem device.

Persons of ordinary skill in the art should understand that all or a part of the processes of the method according to the embodiments may be implemented by a computer program instructing relevant hardware. The program may be stored in a computer readable storage medium. When the program is run, the processes of the methods according to the embodiments are performed. The storage medium may be a magnetic disk, an optical disk, a read-only memory (ROM), a random access memory (RAM), and the like.

Finally, it should be noted that the foregoing embodiments are merely provided for describing the technical solutions of the present invention, but not intended to limit the present invention.

## Claims

1. A wireless modem device, comprising:
a universal serial bus, USB, port (11), configured to connect to a terminal to obtain an action signal from the terminal; and
a sleep/wake-up circuit unit (12), connected to the USB port and configured to send a notification signal to a central processing unit, CPU, of the wireless modem device according to the received action signal to enable the wireless modem device to sleep or wake up;
wherein the action signal is a standby/sleep signal or a wake-up signal of the terminal or a suspend signal or a resume signal of a USB, and the suspend signal and the resume signal are respectively obtained by converting the standby/sleep signal and the wake-up signal.

2. The wireless modem device according to claim 1, wherein the sleep/wake-up circuit unit (12) comprises:
a selection circuit module (123), connected to the USB port and configured to recognize and select the standby/sleep signal or the suspend signal or the wake-up signal or the resume signal input from the USB port;
a sleep circuit module (121), selected to be triggered when the selection circuit module recognizes a received signal as the standby/sleep signal or the suspend signal, wherein the sleep circuit module is configured to send a first notification signal to the CPU, so that the wireless modem device enters a sleep state or a suspend state; and
a wake-up circuit module (122), selected to be triggered when the selection circuit module recognizes a received signal as the wake-up signal or the resume signal, wherein the wake-up circuit module is configured to send a second notification signal to the CPU to wake up or resume the wireless modem device.

3. The wireless modem device according to claim 1 or 2, further comprising:
a power supply circuit, connected to the USB port and configured to output a power supply signal to supply power to the sleep/wake-up circuit unit and the CPU.

4. A terminal, comprising:
a universal serial bus, USB, port (21), configured to connect to a wireless modem device to provide an action signal to the wireless modem device; and
a modem drive unit (22), connected to the USB port and an operating system of the terminal, and configured to receive a sleep signal, a standby signal or a resume signal of the terminal sent by the operating system and convert the received signal into an action signal for driving the wireless modem device to output the action signal to the wireless modem device through the USB port, wherein the action signal is a standby/sleep signal or a wake-up signal of the terminal or a suspend signal or a resume signal of a USB.

5. The terminal according to claim 4, wherein the modem drive unit (22) comprises:
a receiving subunit (221), configured to receive the sleep signal, the standby signal or the resume signal of the terminal sent by the operating system;
a first conversion subunit (222), configured to convert the sleep signal or the standby signal of the terminal into the standby/sleep signal of the terminal, or convert the resume signal of the terminal into the wake-up signal of the terminal; and
a second conversion subunit (223), configured to convert the standby/sleep signal of the terminal into the suspend signal of the USB, or convert the wake-up signal of the terminal into the resume signal of the USB.

6. A wireless modem system, comprising a terminal (52) according to claim 4 and a wireless modem device (51) according to claim 1.

7. A wireless modem device sleep/wake-up method, comprising:
receiving (601) at a wireless modem device an action signal obtained from a terminal through a universal serial bus, USB, port of the wireless modem device; and
sending (602) a notification signal to a central processing unit (CPU) of the wireless modem device according to the received action signal to enable the wireless modem device to sleep or wake up; wherein
the step of receiving the action signal obtained from the terminal through the USB port comprises receiving a standby/sleep signal of the terminal or a suspend signal of a universal serial bus, USB, through th USB port; and
the step of sending the notification signal to the CPU of the wireless modem device according to the received action signal to enable the wireless modem device to sleep or wake up comprises converting the standby/sleep signal of the terminal or the suspend signal of the USB into a first notification signal, and sending the first notification signal to the CPU of the wireless modem device to instruct the wireless modem device to enter a sleep state or a suspend state; and
wherein,
the step of receiving the action signal obtained from the terminal through the serial bus comprises receiving a wake-up signal of the terminal or a resume signal of a USB through the serial bus; and
the step of sending the notification signal to the CPU of the wireless modem device according to the received action signal to enable the wireless modem device to sleep or wake up comprises converting the wake-up signal of the terminal or the resume signal of the USB into a second notification signal, and sending the second notification signal to the CPU of the wireless modem device to wake up or resume the wireless modem device.

8. The wireless modem device sleep/wake-up method according to claim 7, further comprising:
converting (901) at a terminal a sleep signal, a standby signal or a resume signal into an action signal for driving the wireless modem device; and
outputting (902) the action signal to the wireless modem device through a universal serial bus, USB, port of the terminal to enable the wireless modem device to sleep or wake up.

9. The wireless modem device sleep/wake-up method according to claim 8, wherein the step of converting (901) the sleep signal, the standby signal or the resume signal into the action signal for driving the wireless modem device comprises converting the sleep signal or the standby signal into a standby/sleep signal of the terminal or a suspend signal of a universal serial bus, USB, for driving the wireless modem device; and
the step of outputting the action signal to the wireless modem device through the serial bus to enable the wireless modem device to sleep or wake up comprises outputting the standby/sleep signal of the terminal or the suspend signal of the USB to the wireless modem device through the serial bus, so that the wireless modem device enters a sleep state or a suspend state.

10. The wireless modem device sleep/wake-up method according to claim 8, wherein the step of converting (901) the sleep signal, the standby signal or the resume signal into the action signal for driving the wireless modem device comprises converting the resume signal into a wake-up signal of the terminal or a resume signal of the USB for driving the wireless modem device; and
the step of outputting the action signal to the wireless modem device through the serial bus to enable the wireless modem device to sleep or wake up comprises outputting the wake-up signal of the terminal or the resume signal of the USB to the wireless modem device through the serial bus to wake up or resume the wireless modem device.

## Patentansprüche

1. Drahtlose Modemvorrichtung, umfassend:
einen "Universal Serial Bus"-Port, USB-Port, (11), ausgelegt zur Verbindung mit einem Endgerät, um ein Aktionssignal von dem Endgerät zu erhalten; und
eine Schlaf-/Aufwachschaltungseinheit (12), die mit dem USB-Port verbunden und dafür ausgelegt ist, gemäß dem empfangenen Aktionssignal ein Benachrichtigungssignal zu einer zentralen Verarbeitungseinheit (central processing unit, CPU) der drahtlosen Modemvorrichtung zu senden, um es der drahtlosen Modemvorrichtung zu ermöglichen, zu schlafen oder aufzuwachen;
wobei das Aktionssignal ein Standby-/Schlafsignal oder ein Aufwachsignal des Endgeräts oder ein Suspendierungssignal oder ein Wiederaufnahmesignal eines USB ist und das Suspendierungssignal und das Wiederaufnahmesignal jeweils durch Umsetzung des Standby-/Schlafsignals und des Aufwachsignals erhalten werden.

2. Drahtlose Modemvorrichtung nach Anspruch 1, wobei die Schlaf-/Aufwachschaltungseinheit (12) Folgendes umfasst:
ein Auswahlschaltungsmodul (123), das mit dem USB-Port verbunden und dafür ausgelegt ist, das Standby-/Schlafsignal oder das Suspendierungssignal oder das Aufwachsignal oder das Wiederaufnahmesignal, das aus dem USB-Port eingegeben wird, zu erkennen und auszuwählen;
ein Schlafschaltungsmodul (121), das dafür ausgewählt wird, getriggert zu werden, wenn das Auswahlschaltungsmodul ein empfangenes Signal als das Standby-/Schlafsignal oder das Suspendierungssignal erkennt, wobei das Schlafschaltungsmodul dafür ausgelegt ist, ein erstes Benachrichtigungssignal zu der CPU zu senden, so dass die drahtlose Modemvorrichtung in einen Schlafzustand oder einen Suspendierungszustand eintritt; und
ein Aufwachschaltungsmodul (122), das dafür ausgewählt wird, getriggert zu werden, wenn das Auswahlschaltungsmodul ein empfangenes Signal als das Aufwachsignal oder das Wiederaufnahmesignal erkennt, wobei das Aufwachschaltungsmodul dafür ausgelegt ist, ein zweites Benachrichtigungssignal zu der CPU zu senden, um die drahtlose Modemvorrichtung aufzuwecken oder wiederaufzunehmen.

3. Drahtlose Modemvorrichtung nach Anspruch 1 oder 2, ferner umfassend:
eine Stromversorgungsschaltung, die mit dem USB-Port verbunden und dafür ausgelegt ist,
ein Stromversorgungssignal auszugeben, um die Schlaf-/Aufwachschaltungseinheit und die CPU mit Strom zu versorgen.

4. Endgerät, umfassend:
einen "Universal Serial Bus"-Port, USB-Port, (21), ausgelegt zur Verbindung mit einer drahtlosen Modemvorrichtung, um der drahtlosen Modemvorrichtung ein Aktionssignal zuzuführen; und
eine Modemansteuereinheit (22), die mit dem USB-Port und einem Betriebssystem des Endgeräts verbunden und dafür ausgelegt ist, ein Schlafsignal, ein Standbysignal oder ein Wiederaufnahmesignal des Endgeräts zu empfangen, das durch das Betriebssystem gesendet wird, und das empfangene Signal in ein Aktionssignal zur Ansteuerung der drahtlosen Modemvorrichtung umzusetzen, um durch den USB-Port das Aktionssignal an die drahtlose Modemvorrichtung auszugeben, wobei das Aktionssignal ein Standby-/Schlafsignal oder ein Aufwachsignal des Endgeräts oder ein Suspendierungssignal oder ein Wiederaufnahmesignal eines USB ist.

5. Endgerät nach Anspruch 4, wobei die Modemansteuereinheit (22) Folgendes umfasst:
eine Empfangs-Subeinheit (221), ausgelegt zum Empfangen des Schlafsignals, des Standbysignals oder des Wiederaufnahmesignal des Endgeräts, das durch das Betriebssystem gesendet wird;
eine erste Umsetzungs-Subeinheit (222), ausgelegt zum Umsetzen des Schlafsignals oder des Standbysignals des Endgeräts in das Standby-/Schlafsignal des Endgeräts oder Umsetzen des Wiederaufnahmesignals des Endgeräts in das Aufwachsignal des Endgeräts; und
eine zweite Umsetzungs-Subeinheit (223), ausgelegt zum Umsetzen des Standby-/Schlafsignals des Endgeräts in das Suspendierungssignal des USB oder Umsetzen des Aufwachsignals des Endgeräts in das Wiederaufnahmesignal des USB.

6. Drahtloses Modemsystem, das ein Endgerät (52) nach Anspruch 4 und eine drahtlose Modemvorrichtung (51) nach Anspruch 1 umfasst.

7. Schlaf-/Aufwachverfahren einer drahtlosen Modemvorrichtung, umfassend:
Empfangen (601) eines Aktionssignals in einer drahtlosen Modemvorrichtung, das durch einen "Universal Serial Bus"-Port, USB-Port, der drahtlosen Modemvorrichtung von einem Endgerät erhalten wird; und
Senden (602) eines Benachrichtigungssignals zu einer zentralen Verarbeitungseinheit (CPU) der drahtlosen Modemvorrichtung gemäß dem empfangenen Aktionssignal, um der drahtlosen Modemvorrichtung zu ermöglichen, zu schlafen oder aufzuwachen; wobei
der Schritt des Empfangens des durch den USB-Port von dem Endgerät erhaltenen Aktionssignals Empfangen eines Standby-/Schlafsignals des Endgeräts oder eines Suspendierungssignals eines "Universal Serial Bus", USB, durch den USB-Port umfasst; und
der Schritt des Sendens des Benachrichtigungssignals zu der CPU der drahtlosen Modemvorrichtung gemäß dem empfangenen Aktionssignal, um der drahtlosen Modemvorrichtung zu ermöglichen, zu schlafen oder aufzuwachen, Umsetzen des Standby-/Schlafsignals des Endgeräts oder des Suspendierungssignals des USB in ein erstes Benachrichtigungssignal und Senden des ersten Benachrichtigungssignals zu der CPU der drahtlosen Modemvorrichtung, um die drahtlose Modemvorrichtung anzuweisen, in einen Schlafzustand oder einen Suspendierungszustand einzutreten, umfasst; und
wobei der Schritt des Empfangens des durch den seriellen Bus von dem Endgerät erhaltenen Aktionssignals Empfangen eines Aufwachsignals des Endgeräts oder eines Wiederaufnahmesignals eines USB durch den seriellen Bus umfasst; und
der Schritt des Sendens des Benachrichtigungssignals zu der CPU der drahtlosen Modemvorrichtung gemäß dem empfangenen Aktionssignal, um der drahtlosen Modemvorrichtung zu ermöglichen, zu schlafen oder aufzuwachen, Umsetzen des Aufwachsignals des Endgeräts oder des Wiederaufnahmesignals des USB in ein zweites Benachrichtigungssignal und Senden des zweiten Benachrichtigungssignals zu der CPU der drahtlosen Modemvorrichtung, um die drahtlose Modemvorrichtung aufzuwecken oder wiederaufzunehmen, umfasst.

8. Schlaf-/Aufwachverfahren einer drahtlosen Modemvorrichtung nach Anspruch 7, ferner umfassend:
Umsetzen (901) eines Schlafsignals, eines Standbysignals oder eines Wiederaufnahmesignals in ein Aktionssignal zur Ansteuerung der drahtlosen Modemvorrichtung in einem Endgerät; und
Ausgeben (902) des Aktionssignals an die drahtlose Modemvorrichtung durch einen "Universal Serial Bus"-Port, USB-Port, des Endgeräts, um es der drahtlosen Modemvorrichtung zu ermöglichen, zu schlafen oder aufzuwachen.

9. Schlaf-/Aufwachverfahren einer drahtlosen Modemvorrichtung nach Anspruch 8, wobei
der Schritt des Umsetzens (901) des Schlafsignals, des Standbysignals oder des Wiederaufnahmesignals in das Aktionssignal zur Ansteuerung der drahtlosen Modemvorrichtung Umsetzen des Schlafsignals oder des Standbysignals in ein Standby-/Schlafsignal des Endgeräts oder ein Suspendierungssignal eines "Universal Serial Bus", USB, zur Ansteuerung der drahtlosen Modemvorrichtung umfasst; und
der Schritt des Ausgebens des Aktionssignals an die drahtlose Modemvorrichtung durch den seriellen Bus, um es der drahtlosen Modemvorrichtung zu ermöglichen, zu schlafen oder aufzuwachen, Ausgeben des Standby-/Schlafsignals des Endgeräts oder des Suspendierungssignals des USB an die drahtlose Modemvorrichtung durch den seriellen Bus umfasst, so dass die drahtlose Modemvorrichtung in einen Schlafzustand oder einen Suspendierungszustand eintritt.

10. Schlaf-/Aufwachverfahren einer drahtlosen Modemvorrichtung nach Anspruch 8, wobei
der Schritt des Umsetzens (901) des Schlafsignals, des Standbysignals oder des Wiederaufnahmesignals in das Aktionssignal zur Ansteuerung der drahtlosen Modemvorrichtung Umsetzen des Wiederaufnahmesignals in ein Aufwachsignal des Endgeräts oder ein Wiederaufnahmesignal des USB zur Ansteuerung der drahtlosen Modemvorrichtung umfasst; und
der Schritt des Ausgebens des Aktionssignals an die drahtlose Modemvorrichtung durch den seriellen Bus, um es der drahtlosen Modemvorrichtung zu ermöglichen, zu schlafen oder aufzuwachen, Ausgeben des Aufwachsignals des Endgeräts oder des Wiederaufnahmesignals des USB an die drahtlose Modemvorrichtung durch den seriellen Bus umfasst, um die drahtlose Modemvorrichtung aufzuwecken oder wiederaufzunehmen.

## Revendications

1. Dispositif modem sans fil, comprenant :
un port bus série universel, dit USB, (11), configuré pour être connecté à un terminal afin d'obtenir un signal d'action du terminal ; et
une unité circuit de sommeil/réveil (12), connectée au port USB et configurée pour transmettre un signal de notification à une unité centrale de traitement, dite CPU, du dispositif modem sans fil selon le signal d'action reçu afin de mettre en sommeil ou de réveiller le dispositif modem sans fil ;
dans lequel le signal d'action est un signal de veille/sommeil ou un signal de réveil du terminal ou un signal de suspension ou un signal de reprise d'un USB, et le signal de suspension et le signal de reprise sont respectivement obtenus en convertissant le signal de veille/sommeil et le signal de réveil.

2. Dispositif modem sans fil selon la revendication 1, dans lequel l'unité circuit de sommeil/réveil (12) comprend :
un module circuit de sélection (123), connecté au port USB et configuré pour reconnaître et sélectionner le signal de veille/sommeil ou le signal de suspension ou le signal de réveil ou le signal de reprise appliqué en entrée depuis le port USB ;
un module circuit de sommeil (121), sélectionné pour être déclenché lorsque le module circuit de sélection reconnaît un signal reçu comme le signal de veille/sommeil ou le signal de suspension, lequel module circuit de sommeil est configuré pour transmettre un premier signal de notification à la CPU pour faire en sorte que le dispositif modem sans fil adopte un état de sommeil ou un état de suspension ; et
un module circuit de réveil (122), sélectionné pour être déclenché lorsque le module circuit de sélection reconnaît un signal reçu comme le signal de réveil ou le signal de reprise, lequel module circuit de réveil est configuré pour transmettre un deuxième signal de notification à la CPU afin de réveiller ou de faire reprendre le dispositif modem sans fil.

3. Dispositif modem sans fil selon la revendication 1 ou 2, comprenant en outre :
un circuit d'alimentation, connecté au port USB et configuré pour fournir un signal d'alimentation afin d'alimenter l'unité circuit de sommeil/réveil et la CPU.

4. Terminal, comprenant :
un port bus série universel, dit USB, (21), configuré pour être connecté à un dispositif modem sans fil afin de fournir un signal d'action au dispositif modem sans fil ; et
une unité pilote de modem (22), connectée au port USB et à un système d'exploitation du terminal, et configurée pour recevoir un signal de sommeil, un signal de veille ou un signal de reprise du terminal transmis par le système d'exploitation et convertir le signal reçu en un signal d'action servant à piloter le dispositif modem sans fil afin de fournir le signal d'action au dispositif modem sans fil via le port USB, lequel signal d'action est un signal de veille/sommeil ou un signal de réveil du terminal ou un signal de suspension ou un signal de reprise d'un USB.

5. Terminal selon la revendication 4, dans lequel l'unité pilote de modem (22) comprend :
une sous-unité de réception (221), configurée pour recevoir le signal de sommeil, le signal de veille ou le signal de reprise du terminal transmis par le système d'exploitation ;
une première sous-unité de conversion (222), configurée pour convertir le signal de sommeil ou le signal de veille du terminal en le signal de veille/sommeil du terminal, ou convertir le signal de reprise du terminal en le signal de réveil du terminal ; et
une deuxième sous-unité de conversion (223), configurée pour convertir le signal de veille/sommeil du terminal en le signal de suspension de l'USB, ou convertir le signal de réveil du terminal en le signal de reprise de l'USB.

6. Système modem sans fil, comprenant un terminal (52) selon la revendication 4 et un dispositif modem sans fil (51) selon la revendication 1.

7. Procédé de sommeil/réveil pour dispositif modem sans fil, comprenant les étapes consistant à :
recevoir (601), au niveau d'un dispositif modem sans fil, un signal d'action obtenu d'un terminal via un port bus série universel, dit USB, du dispositif modem sans fil ; et
transmettre (602) un signal de notification à une unité centrale de traitement (CPU) du dispositif modem sans fil selon le signal d'action reçu afin de mettre en sommeil ou de réveiller le dispositif modem sans fil ; dans lequel
l'étape consistant à recevoir le signal d'action obtenu du terminal via le port USB comprend l'étape consistant à recevoir un signal de veille/sommeil du terminal ou un signal de suspension d'un bus série universel, dit USB, via le port USB ; et
l'étape consistant à transmettre le signal de notification à la CPU du dispositif modem sans fil selon le signal d'action reçu afin de mettre en sommeil ou de réveiller le dispositif modem sans fil comprend l'étape consistant à convertir le signal de veille/sommeil du terminal ou le signal de suspension de l'USB en un premier signal de notification, et transmettre le premier signal de notification à la CPU du dispositif modem sans fil pour donner pour instruction au dispositif modem sans fil d'adopter un état de sommeil ou un état de suspension ; et
dans lequel,
l'étape consistant à recevoir le signal d'action obtenu du terminal via le bus sériel comprend l'étape consistant à recevoir le signal de réveil du terminal ou un signal de reprise d'un USB via le bus sériel ; et
l'étape consistant à transmettre le signal de notification à la CPU du dispositif modem sans fil selon le signal d'action reçu afin de mettre en sommeil ou de réveiller le dispositif modem sans fil comprend l'étape consistant à convertir le signal de réveil du terminal ou le signal de reprise de l'USB en un deuxième signal de notification, et transmettre le deuxième signal de notification à la CPU du dispositif modem sans fil afin de réveiller ou faire reprendre le dispositif modem sans fil.

8. Procédé de sommeil/réveil pour dispositif modem sans fil selon la revendication 7, comprenant en outre les étapes consistant à :
convertir (901), au niveau d'un terminal, un signal de sommeil, un signal de veille ou un signal de reprise en un signal d'action servant à piloter le dispositif modem sans fil ; et
fournir (902) le signal d'action au dispositif modem sans fil via un port bus série universel, dit USB, du terminal afin de mettre en sommeil ou de réveiller le dispositif modem sans fil.

9. Procédé de sommeil/réveil pour dispositif modem sans fil selon la revendication 8, dans lequel
l'étape consistant à convertir (901) le signal de sommeil, le signal de veille ou le signal de reprise en le signal d'action servant à piloter le dispositif modem sans fil comprend l'étape consistant à convertir le signal de sommeil ou le signal de veille en un signal de veille/sommeil du terminal ou un signal de suspension d'un bus série universel, dit USB, servant à piloter le dispositif modem sans fil ; et
l'étape consistant à fournir le signal d'action au dispositif modem sans fil via le bus sériel afin de mettre en sommeil ou de réveiller le dispositif modem sans fil comprend l'étape consistant à fournir le signal de veille/sommeil du terminal ou le signal de suspension de l'USB au dispositif modem sans fil via le bus sériel pour faire en sorte que le dispositif modem sans fil adopte un état de sommeil ou un état de suspension.

10. Procédé de sommeil/réveil pour dispositif modem sans fil selon la revendication 8, dans lequel
l'étape consistant à convertir (901) le signal de sommeil, le signal de veille ou le signal de reprise en le signal d'action servant à piloter le dispositif modem sans fil comprend l'étape consistant à convertir le signal de reprise en un signal de réveil du terminal ou un signal de reprise de l'USB servant à piloter le dispositif modem sans fil ; et
l'étape consistant à fournir le signal d'action au dispositif modem sans fil via le bus sériel afin de mettre en sommeil ou de réveiller le dispositif modem sans fil comprend l'étape consistant à fournir le signal de réveil du terminal ou le signal de reprise de l'USB au dispositif modem sans fil via le bus sériel afin de réveiller ou de faire reprendre le dispositif modem sans fil.
